# EUROPÄISCHE PATENTSCHRIFT

(11) **EP 1 285 518 B1**
(45) Veröffentlichungstag und Bekanntmachung des Hinweises auf die Patenterteilung: **23.02.2005**
(21) Anmeldenummer: 01935936.3
(22) Anmeldetag: 16.03.2001
(51) Int. Cl.: H04M 1/247, H04M 1/725

(54) **MOBILFUNKTELEFON MIT ASSOZIATIVER BENUTZEROBERFLÄCHE**
MOBILE RADIO TELEPHONE COMPRISING AN ASSOCIATIVE USER INTERFACE
RADIOTELEPHONE MOBILE A SURFACE UTILISATEUR ASSOCIEE

(30) Priorität: 31.05.2000 DE 10027933
(43) Veröffentlichungstag der Anmeldung: 26.02.2003
(73) Patentinhaber: Siemens Aktiengesellschaft, 80333 München (DE)
(72) Erfinder: SCHNABEL, Christian, 13585 Berlin (DE)
(86) Internationale Anmeldenummer: PCT/DE2001/001108
(87) Internationale Veröffentlichungsnummer: WO 2001/093542

(56) Entgegenhaltungen:
- EP-A- 0 633 684
- EP-A- 0 679 003
- WO-A-99/33244
- WO-A-99/45459
- DE-C- 19 706 595
- JP-A- 2000 115 345

## Beschreibung

Die Erfindung bezieht sich auf ein Mobilfunkendgerät mit einer Anzeigeeinrichtung zum Anzeigen von Anzeigeelementen, die jeweils eine benutzerseitig auswählbare Gerätefunktion des Mobilfunkendgeräts darstellen, und mit Bedienelementen, mit denen jeweils eine der dargestellten Gerätefunktionen aktivierbar ist, wobei die Anzeigeelemente auf der Anzeigeeinrichtung derart räumlich angeordnet werden, dass jedem angezeigten Anzeigeelement jeweils ein Bedienelement zugeordnet ist.

Ein derartiges Mobilfunkendgerät ist in der Bedienungsanleitung zum Siemens Mobilfunktelefon C25 beschrieben. Dieses Mobilfunkendgerät weist eine Menüsteuerung auf; dies bedeutet, dass die Gerätefunktionen zu Funktionsgruppen zusammengefasst sind. Jede Funktionsgruppe wird dabei durch einen Menüpunkt des Menüs repräsentiert. Ausgehend von einem übergeordneten ersten Menü wird dann - bei entsprechender benutzerseitiger Bedienung der Bedienelemente - in Untermenüs verzweigt, aus denen dann bei Aktivierung ggf. jeweils in weitere Untermenüs weiterverzweigt wird. Diese Verzweigen bzw. Weiterverzweigen wird dabei so oft wiederholt, bis eine einzige der geräteseitig zur Verfügung stehenden Gerätefunktionen eindeutig bestimmt und ausgewählt worden ist. Die Navigation durch die Menüs wird dabei mit den Bedienelementen, die als Bestätigungstasten realisiert sind, ermöglicht. Es wird auch auf das Dokument EP-A-0 679 003 verwiesen, welches ein Mobilfunkgerät gemäß dem Oberbegriff von Anspruch 1 beschreibt.

Der Erfindung liegt die Aufgabe zugrunde, ein Mobilfunkendgerät anzugeben, bei dem die Auswahl und das Aktivieren von Gerätefunktionen einfacher und schneller möglich ist als bei dem vorbekannten Mobilfunkendgerät.

Diese Aufgabe wird bei einem Mobilfunkendgerät der eingangs angegebenen Art erfindungsgemäß dadurch gelöst, das Mobilfunkendgerät derart ausgestaltet ist, dass es gerätefunktionsindividuell erfasst, wie häufig die jeweiligen Gerätefunktionen aktiviert werden, und die Anzeigeelemente für die am häufigsten aktivierten Gerätefunktionen bevorzugt anzeigt, falls anzahlmäßig mehr aktivierbare Gerätefunktionen zur Verfügung stehen als Bedienelemente vorhanden sind.

Ein wesentlicher Vorteil des erfindungsgemäßen Mobilfunkendgeräts besteht darin, dass es vom Benutzer besonders schnell und einfach bedient werden kann, weil ihm diejenigen Gerätefunktionen, die er besonders häufig benutzt, bevorzugt zur Aktivierung angeboten bzw. angezeigt werden. Dieser Vorteil wird bei dem erfindungsgemäßen Mobilfunkendgerät konkret dadurch erreicht, dass gerätefunktionsindividuell erfasst wird, wie häufig die jeweiligen Gerätefunktionen aktiviert werden. Auf der Anzeigeeinrichtung werden dann die am häufigsten aufgerufenen Gerätefunktionen angezeigt.

Um dem Benutzer aber auch das Aktivieren derjenigen Gerätefunktionen zu ermöglichen, die weniger häufig aktiviert werden und deshalb - beispielsweise wegen der begrenzten Anzahl an vorhandenen Bedienelementen bzw. aus Platzgründen auf der Anzeigeeinrichtung - durch die Anzeigeeinrichtung nicht dargestellt werden, wird es erfindungsgemäß als vorteilhaft angesehen, wenn das Mobilfunkendgerät eine Eingabeeinrichtung aufweist, mit der die nicht dargestellten Gerätefunktionen benutzerseitig zur Anzeige gebracht und/oder aktiviert werden können.

Besonders einfach und kostengünstig lässt sich die Eingabeeinrichtung realisieren, wenn sie durch die sowieso bei Mobilfunkendgeräten vorhandene Nummerntastatur gebildet ist; denn in diesem Fall kann auf das Vorsehen zusätzlicher Tastenelemente oder dergleichen verzichtet werden, wodurch die Herstellungskosten bei dem erfindungsgemäßen Mobilfunkendgerät minimiert werden.

Besonders schnell und einfach lässt sich das erfindungsgemäße Mobilfunkendgerät bedienen, wenn die Nummerntastatur des Mobilfunkendgeräts zur Texteingabe geeignet ist und das Mobilfunkendgerät derart ausgestaltet ist, dass die Anzeigeeinrichtung bei Vorliegen einer Texteingabe diejenige Gerätefunktion anzeigt, deren Funktionsbezeichnung mit der Texteingabe am besten übereinstimmt; denn bei dieser Ausgestaltung des erfindungsgemäßen Mobilfunkendgerätes wird quasi eine "assoziative" Benutzeroberfläche geschaffen. Konkret vergleicht das Mobilfunkendgerät die jeweilige Texteingabe mit den Funktionsbezeichnungen der zur Verfügung stehenden Gerätefunktionen und zeigt auf der Anzeigeeinrichtung dann die Anzeigelemente für diejenigen Gerätefunktionen an, deren Funktionsbezeichnung mit der Texteingabe am ehesten übereinstimmt. Beispielsweise kann die assoziative Benutzeroberfläche derart ausgestaltet sein, dass nach der Eingabe eines jeden Buchstabens der Texteingabe verglichen wird, welche der Funktionsbezeichnungen der Gerätefunktionen am besten mit der Texteingabe übereinstimmen, wobei die so ausgewählten Gerätefunktionen mit ihren Anzeigeelementen dann auf der Anzeigeeinrichtung des Mobilfunkendgerätes angezeigt werden. Sind beispielsweise auf der Anzeigeeinrichtung vier Gerätefunktionen mit ihren Anzeigeelementen darstellbar, so würden - nach der Eingabe eines Textes mit der Eingabeeinrichtung - diejenigen vier Gerätefunktionen mit ihren grafischen Anzeigeelementen auf der Anzeigeeinrichtung dargestellt werden, deren Funktionsbezeichnung mit der Texteingabe am besten übereinstimmt. Der Benutzer kann dann anschließend mit Hilfe der Bedienelemente diejenige Gerätefunktion auswählen, die er aktivieren möchte; ist jedoch die von ihm gewünschte Gerätefunktion nicht mit einem Anzeigeelement auf der Anzeigeeinrichtung dargestellt, so kann er durch Korrektur der Texteingabe bzw. durch Eingabe weiterer Buchstaben dafür sorgen, dass sich die Anzeige auf der Anzeigeeinrichtung dahingehend ändert, dass die von ihm gewünschte Gerätefunktion mit dem jeweiligen Anzeigeelement auf der Anzeigeeinrichtung erscheint. Ist dies erreicht, so kann er durch Bedienung des zugeordneten Bedienelementes die gewünschte Gerätefunktion aufrufen.

Im Rahmen einer Weiterbildung des erfindungsgemäßen Mobilfunkendgerätes wird es als vorteilhaft angesehen, wenn die Eingabeeinrichtung durch eine zur Erkennung von Sprachbefehlen fähige Spracherkennungseinrichtung gebildet ist, und das Mobilfunkendgerät derart ausgestaltet ist, dass die Anzeigeeinrichtung bei Vorliegen eines Sprachbefehls das Anzeigeelement für diejenigen Gerätefunktionen anzeigt, deren Funktionsbezeichnungen mit dem Sprachbefehl am besten übereinstimmen. Bei dieser Weiterbildung des erfindungsgemäßen Mobilfunkendgerätes können die nicht angezeigten Gerätefunktionen nämlich durch eine Spracheingabe zur Anzeige gebracht und/oder aktiviert werden, wodurch ein besonders hoher Bedienungskomfort erreicht wird.

Zur Erläuterung der Erfindung zeigt
Figur 1 ein Ausführungsbeispiel für ein erfindungsgemäßes Mobilfunkendgerät und
Figur 2 das Mobilfunkendgerät gemäß der Figur 1 in einer detaillierteren Darstellung.

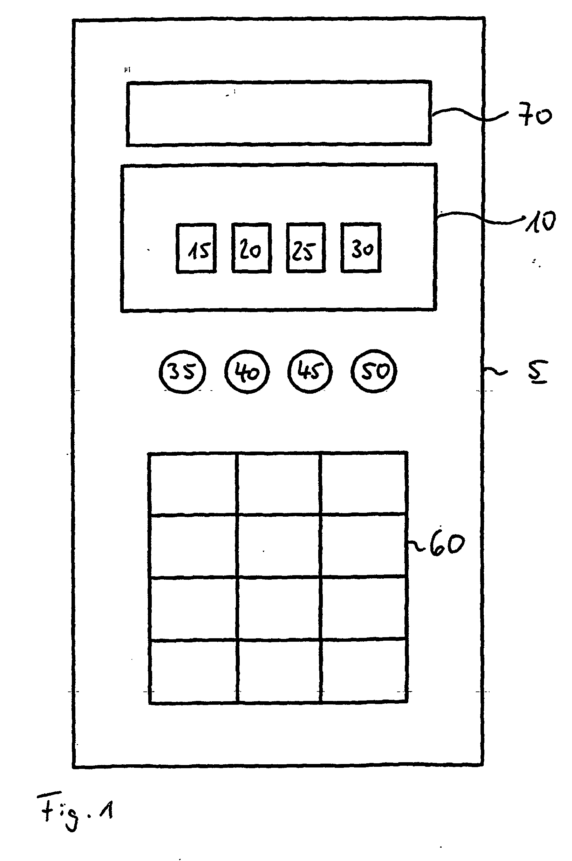

In der Figur 1 ist ein Mobilfunkendgerät 5 dargestellt, bei dem es sich beispielsweise um ein im DECT-, GSM- oder Blue-Tooth-Standard arbeitendes Mobiltelefon handeln kann. Dieses Mobilfunkendgerät 5 weist eine Anzeigeeinrichtung 10 auf, mit der grafische Anzeigeelemente 15, 20, 25 und 30 - in der Fachsprache Icons genannt - dargestellt werden können. Die grafischen Anzeigeelemente 15, 20, 25 und 30 dienen dabei konkret dazu, jeweils eine benutzerseitig auswählbare Gerätefunktion des Mobilfunkendgerätes 5 darzustellen. Das Mobilfunkendgerät 5 weist darüber hinaus Bedienelemente 35, 40, 45 und 50 auf, denen in der Figur 1 jeweils ein Anzeigeelement 15, 20, 25 und 30 räumlich zugeordnet ist. Durch Bedienung bzw. Aktivierung eines der Bedienelemente 35, 40, 45 oder 50 wird die jeweils zugeordnete Gerätefunktion aktiviert.

Um eine übersichtliche Darstellung in der Figur 1 zu gewährleisten, sind die bei Mobilfunkendgeräten üblicherweise vorhandenen weiteren Komponenten wie Lautsprecher, Mikrofon, Gabeltasten, Rückruftaste, Ein-Aus-Taste etc. nicht dargestellt.

Das Mobilfunkendgerät 5 weist eine in der Figur 1 nicht dargestellte Steuereinrichtung auf, die gerätefunktionsindividuell ermittelt und in einer zugeordneten Speichereinrichtung abspeichert, wie häufig die jeweiligen Gerätefunktionen aktiviert werden.

Beim Betrieb des Mobilfunkendgeräts 5 wird es vorkommen, dass das Gerät in einen Betriebsstatus gebracht wird, bei dem mehr als vier Gerätefunktionen vom Benutzer auswählbar und aktivierbar sind, also mehr Gerätefunktionen, als Bedienelemente zur Aktivierung zur Verfügung stehen; denn bei dem Mobilfunkendgerät 5 sind nur vier Bedienelemente vorgesehen. Beispielsweise bei einem Neueinschalten des Mobilfunkendgerätes 5 werden quasi alle Funktionen des Mobilfunkendgerätes zur Verfügung stehen, wohingegen in einem anderen Betriebszustand bzw. Betriebsstatus des Mobilfunkendgerätes 5 nur eine sehr eingeschränkte Anzahl von Gerätefunktionen aktivierbar sein kann.

Um für den Fall, dass mehr Gerätefunktionen zur Verfügung stehen, als Bedienelemente vorhanden sind, eine besonders einfache und schnelle Bedienung des Mobilfunkendgeräts 5 zu ermöglichen, ist das Mobilfunkendgerät 5 derart ausgestaltet, dass es die Anzeigeelemente (Icons) 15, 20, 25 und 30 für die am häufigsten aktivierten Gerätefunktionen anzeigt, weil damit zu rechnen ist, dass eine dieser am häufigsten aktivierten Gerätefunktionen wieder aktiviert werden wird; die weniger häufig aktivierten Gerätefunktionen werden also auf der Anzeigeeinrichtung 10 zunächst nicht dargestellt.

Um nun zu ermöglichen, dass auch diejenigen Gerätefunktionen auswählbar sind, die auf der Anzeigeeinrichtung nicht dargestellt sind, weist das Mobilfunkendgerät 5 eine Nummerntastatur 60 als Eingabeeinrichtung auf, mit der in üblicher Weise die Telefonnummern in das Mobilfunkendgerät 5 eingegeben werden können; diese Nummerntastatur 60 ist aber in an sich bekannter Weise auch zur Eingabe von Buchstaben und damit zur Texteingabe geeignet. Mit dieser Nummerntastatur 60 ist es bei dem Mobilfunkendgerät 5 möglich, einen Text einzugeben, und zwar einen Text, der die gewünschte Gerätefunktion bezeichnet. Mit dieser Nummertastatur 60 kann der Bediener also für diejenigen Gerätefunktionen, für die kein Anzeigeelement angezeigt wird, die entsprechende Funktionsbezeichnung der Gerätefunktion eingeben. Um den eingegebenen Text dem Benutzer auch anzeigen zu können, ist das Mobilfunkendgerät 5 mit einem separaten Display 70 ausgestattet, das die benutzerseitige Texteingabe anzeigt. Mit der in der Figur 1 nicht dargestellten Steuereinrichtung wird die Texteingabe mit den in der erwähnten Speichereinrichtung abgespeicherten Funktionsbezeichnungen aller für das Mobilfunkendgerät 5 verfügbaren Gerätefunktionen verglichen, und es werden diejenigen Anzeigeelemente 15, 20, 25 und 30 auf der Anzeigeeinrichtung 10 angezeigt, deren Gerätefunktion bzw. Funktionsbezeichnung am ehesten bzw. am besten mit der Texteingabe auf dem Display 70 übereinstimmen; die Speichereinrichtung ist also als eine Art "Gerätefunktionsdatenbank" aufzufassen. Stellt der Benutzer des Mobilfunktelefons nach erfolgter Texteingabe fest, dass die von ihm gewünschte Gerätefunktion als Anzeigeelement auf der Anzeigeeinrichtung 10 dargestellt ist, so kann er durch Aktivierung des jeweils zugeordneten Bedienelements 35, 40, 45 bzw. 50 die gewünschte Gerätefunktion auswählen bzw. aktivieren.

Das Mobilfunkendgerät 5 kann dabei derart ausgestaltet sein, dass die in der Figur 1 nicht dargestellte Steuereinrichtung des Mobilfunkendgerätes 5 bei einer Betätigung eines der Bedienelemente 35, 40, 45 und 50 zunächst auf der Anzeigeeinrichtung 10 oder dem Display 70 angibt, um welche Gerätefunktion es sich handelt. Dies lässt sich dadurch erreichen, dass die entsprechende Kurzbeschreibung der jeweiligen Gerätefunktion eingeblendet wird. Anschließend - also bei einer weiteren Betätigung des jeweiligen Bedienelementes - erfolgt dann die tatsächliche Aktivierung der Gerätefunktion.

Bei der obigen Darstellung des Mobilfunkendgerätes 5 wurde davon ausgegangen, dass zur Aktivierung bzw. zur Auswahl nicht dargestellter Gerätefunktionen die Nummerntastatur 60 herangezogen wird; statt dessen ist es ebenfalls denkbar, die nicht dargestellten Gerätefunktionen benutzerseitig durch eine entsprechende Spracheingabe zu erreichen; dies setzt natürlich eine entsprechende Spracherkennungsfunktion in dem Mobilfunkendgerät 5 voraus.

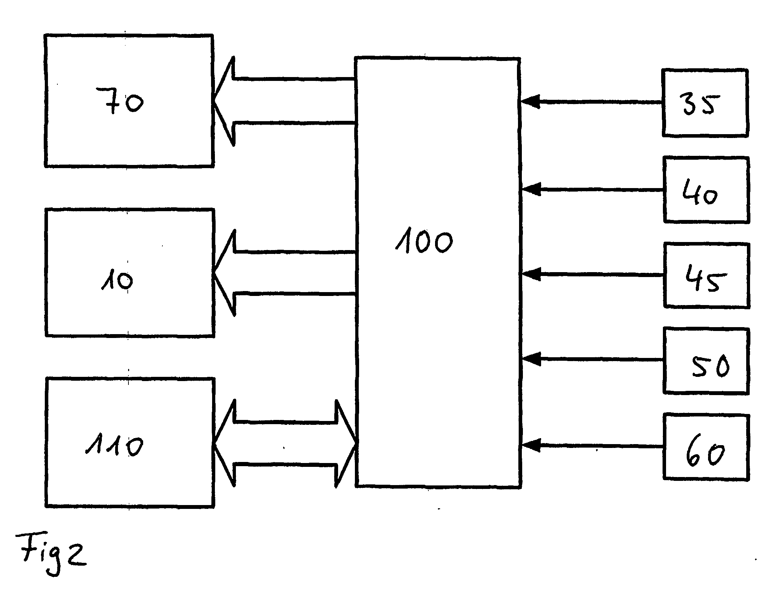

Die Figur 2 zeigt das Mobilfunktelefon 5 gemäß Figur 1 noch einmal detaillierter. Die oben bereits erwähnte Steuereinrichtung trägt das Bezugszeichen 100; mit der Steuereinrichtung 100 steht die ebenfalls bereits oben erwähnte Speichereinrichtung mit dem Bezugszeichen 110 in Verbindung. Darüber hinaus sind in der Figur 2 auch die Bedienelemente 35, 40, 45 und 50 sowie die Nummerntastatur 60 dargestellt, die eingangsseitig mit der Steuereinrichtung 100 verbunden sind. 8 Ausgangsseitig ist an die Steuereinrichtung 100 die Anzeigeeinrichtung 10 sowie das Display 70 angeschlossen.

Die Steuereinrichtung 100 kann beispielsweise durch einen Mikrocomputer gebildet sein, der entsprechend der im Zusammenhang mit der Figur 1 detailliert erläuterten Funktionsbeschreibung zum Mobilfunkendgerät 5 programmiert ist; die Speichereinrichtung 110 kann beispielsweise durch ein Halbleiter-Speicherelement gebildet sein.

Im übrigen kann das Mobilfunktelefon 5 "downloadfähig" ausgeführt sein; d. h., dass die Software bzw. das Steuerungsprogramm für die Steuereinrichtung 100 beispielsweise über die vom Mobilfunkendgerät aufgebaute Funkverbindung modifiziert wird. So können z. B. zuvor nicht vorhandene Gerätefunktionen nachgeladen und die Art bzw. das Aussehen der Anzeigeelemente (Icons) benutzerindividuell geändert werden. Die Steuereinrichtung 100 speichert die Software bzw. das Steuerungsprogramm dann in der Speichereinrichtung 110 ab.

## Patentansprüche

1. Mobilfunkendgerät (5)
- mit einer Anzeigeeinrichtung (10) zum Anzeigen von Anzeigeelementen (15, 20, 25, 30), die jeweils eine benutzerseitig auswählbare Gerätefunktion des Mobilfunkendgeräts darstellen, und
- mit Bedienelementen (35, 40, 45 und 50), mit denen jeweils eine der dargestellten Gerätefunktionen aktivierbar ist,
- wobei die Anzeigeelemente auf der Anzeigeeinrichtung derart räumlich angeordnet werden, dass jedem angezeigten Anzeigeelement jeweils ein Bedienelement zugeordnet ist,
**dadurch gekennzeichnet, dass**
- das Mobilfunkendgerät derart ausgestaltet ist,
- dass es gerätefunktionsindividuell erfasst, wie häufig die jeweiligen Gerätefunktionen aktiviert werden, und
- die Anzeigeelemente für die am häufigsten aktivierten Gerätefunktionen bevorzugt anzeigt, falls anzahlmäßig mehr aktivierbare Gerätefunktionen zur Verfügung stehen als Bedienelemente vorhanden sind.

2. Mobilfunkendgerät nach Anspruch 1,
**dadurch gekennzeichnet, dass**
- es eine Eingabeeinrichtung(60) aufweist, mit der die nicht dargestellten Gerätefunktionen benutzerseitig zur Anzeige gebracht und/oder aktiviert werden können.

3. Mobilfunkendgerät nach Anspruch 2,
**dadurch gekennzeichnet, dass**
- die Eingabeeinrichtung durch eine Nummerntastatur (60) des Mobilfunkendgeräts gebildet ist.

4. Mobilfunkendgerät nach Anspruch 3,
**dadurch gekennzeichnet, dass**
- die Nummerntastatur des Mobilfunkendgeräts zur Texteingabe geeignet ist und
- das Mobilfunkendgerät derart ausgestaltet ist, dass die Anzeigeeinrichtung bei Vorliegen einer Texteingabe diejenige Gerätefunktion anzeigt, deren Funktionsbezeichnung mit der Texteingabe am besten übereinstimmt.

5. Mobilfunkendgerät nach Anspruch 2,
**dadurch gekennzeichnet, dass**
- die Eingabeeinrichtung durch eine zur Erkennung von Sprachbefehlen fähige Spracherkennungseinrichtung gebildet ist und
- das Mobilfunkendgerät derart ausgestaltet ist, dass die Anzeigeeinrichtung bei Vorliegen eines Sprachbefehls das Anzeigeelement für diejenigen Gerätefunktionen anzeigt, deren Funktionsbezeichnungen mit dem Sprachbefehl am besten übereinstimmen.

## Claims

1. Mobile radio telephone terminal (5)
- comprising a display device (10) for displaying display elements (15, 20, 25, 30) which in each case represent a user-selectable device function of the mobile radio telephone terminal, and
- comprising operating elements (35, 40, 45 and 50) by means of which in each case one of the device functions represented can be activated,
- the display elements being spatially arranged on the display device in such a manner that in each case one operating element is associated with each display element displayed,
**characterized in that**
- the mobile radio telephone terminal is designed in such a manner
- that it detects with respect to each individual device function how often the respective device functions are activated, and
- displays with preference the display elements for the most frequently activated device functions if there is a greater number of activatable device functions available than there are operating elements.

2. Mobile radio telephone terminal according to Claim 1, **characterized in that**
- it has an input device (60) by means of which the device functions not shown can be displayed and/or activated by the user.

3. Mobile radio telephone terminal according to Claim 2, **characterized in that**
- the input device is formed by a numerical keypad (60) of the mobile radio telephone terminal.

4. Mobile radio telephone terminal according to Claim 3, **characterized in that**
- the numerical keypad of the mobile radio telephone terminal is suitable for inputting text and
- the mobile radio telephone terminal is designed in such a manner that, when a text input is present, the display device displays that device function whose function designation best corresponds to the text input.

5. Mobile radio telephone terminal according to Claim 2, **characterized in that**
- the input device is formed by a voice recognition device capable of recognizing voice commands and
- the mobile radio telephone terminal is designed in such a manner that, when a voice command is present, the display device displays the display element for those device functions whose function designations best correspond to the voice command.

## Revendications

1. Terminal de radiocommunication mobile (5)
- comprenant un dispositif de visualisation (10) destiné à visualiser ou afficher des visuels (15, 20, 25, 30) qui représentent chacun une fonction d'appareil du terminal de radiocommunication mobile, qui peut être sélectionnée par l'utilisateur, et
- comprenant des éléments de commande (35, 40, 45 et 50) à l'aide desquels il est possible d'activer respectivement l'une des fonctions d'appareil représentées,
- les visuels étant disposés spatialement sur le dispositif de visualisation de façon telle qu'à chaque visuel affiché soit respectivement associé un élément de commande,
**caractérisé en ce que**
- le terminal de radiocommunication mobile est conçu de façon telle
- qu'il relève, individuellement par fonction d'appareil, la fréquence d'activation des fonctions d'appareil respectives, et
- qu'il affiche de manière préférentielle les visuels des fonctions d'appareil les plus fréquemment activées, dans le cas où le nombre disponible de fonctions d'appareil pouvant être activées, est plus grand que le nombre existant d'éléments de commande.

2. Terminal de radiocommunication mobile selon la revendication 1, **caractérisé**
- **en ce qu'**il comporte un dispositif de saisie (60) à l'aide duquel il est possible pour l'utilisateur, de faire visualiser et/ou d'activer les fonctions d'appareil non représentées.

3. Terminal de radiocommunication mobile selon la revendication 2, **caractérisé**
- **en ce que** le dispositif de saisie est formé par un clavier numérique (60) du terminal de radiocommunication mobile.

4. Terminal de radiocommunication mobile selon la revendication 3, **caractérisé**
- **en ce que** le clavier numérique du terminal de radiocommunication mobile est adapté à la saisie de texte, et
- le terminal de radiocommunication mobile est conçu de façon telle, que le dispositif de visualisation, en présence d'une saisie de texte, affiche la fonction d'appareil dont la désignation de fonction coïncide le mieux avec la saisie de texte.

5. Terminal de radiocommunication mobile selon la revendication 2, **caractérisé**
- **en ce que** le dispositif de saisie est formé par un dispositif de reconnaissance vocale capable de reconnaître des ordres de type vocal, et
- le terminal de radiocommunication mobile est conçu de façon telle, que le dispositif de visualisation, en présence d'un ordre vocal, affiche le visuel pour les fonctions d'appareil dont les désignations de fonction coïncident le mieux avec l'ordre vocal.
